# FASCICULE DE BREVET EUROPEEN

(11) **EP 0 556 120 B1**
(45) Date de publication et mention de la délivrance du brevet: **17.01.1996**
(21) Numéro de dépôt: 93400342.7
(22) Date de dépôt: 11.02.1993
(51) Int. Cl.: B60K 37/00

(54) **Procédé de personnalisation de tableaux de bord de véhicules, système mettant en oeuvre ce procédé et tableau de bord ainsi obtenu**
Verfahren zur Anpassung von Fahrzeug-Armaturenbrettern, System zur Umsetzung dieses Verfahrens und daraus resultierendes Armaturenbrett
Adaptation method for vehicle dashboards, system to accomplish this method and resulting dashboard

(30) Priorité: 12.02.1992 FR 9201560
(43) Date de publication de la demande: 18.08.1993
(73) Titulaire: JAEGER, F-92000 Nanterre Cédex (FR)
(72) Inventeur: Bezard, Jean-Jacques, F-78400 Chatou (FR); Hidden, Philippe, F-92400 Courbevoie (FR)
(74) Mandataire: Martin, Jean-Jacques

(56) Documents cités:
- DE-A- 3 425 263
- DE-A- 4 015 170
- PATENT ABSTRACTS OF JAPAN vol. 13, no. 148 (M-812)(3496) 11 Avril 1989 & JP-A-63 309 386 (HITACHI) 16 Décembre 1988

## Description

La présente invention concerne le domaine des tableaux de bord de véhicules, en particulier de véhicules automobiles.

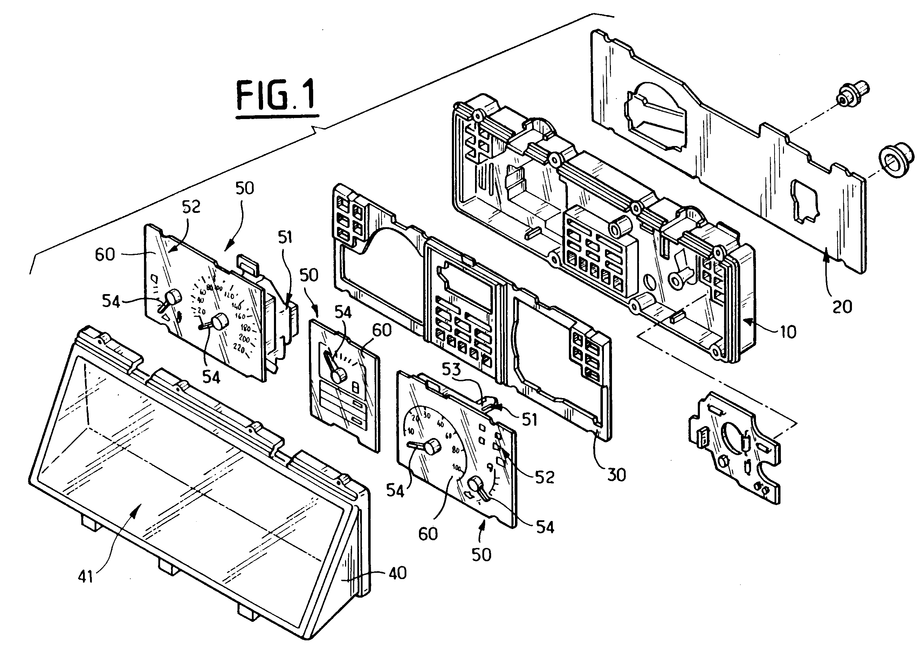

On a représenté sur la figure 1 annexée, en perspective éclatée, la structure générale d'un tableau de bord classique.

On aperçoit sur la figure 1 annexée, un tableau de bord comprenant un boîtier 10, un circuit imprimé 20 placé sur la face arrière du boîtier 10, un réhaut 30 placé sur la face avant du boîtier 10, une visière 40 munie d'une vitre transparente 41 placée sur l'avant du réhaut 30 et plusieurs modules indicateurs 50.

Le plus souvent, chaque module indicateur 50 comprend au moins un mouvement de mesure 51 comportant un organe moteur 53 apte à entraîner une aiguille 54, plusieurs témoins lumineux 52 et un cadran 60 placé sur l'arrière des aiguilles 54 et portant diverses indications.

Le cadran 60 associé aux aiguilles 54 des mouvements de mesure peut servir par exemple de compteur de vitesse ou de compte-tours.

Les indications portées sur le cadran 60 peuvent faire l'objet d'un grand nombre de variantes.

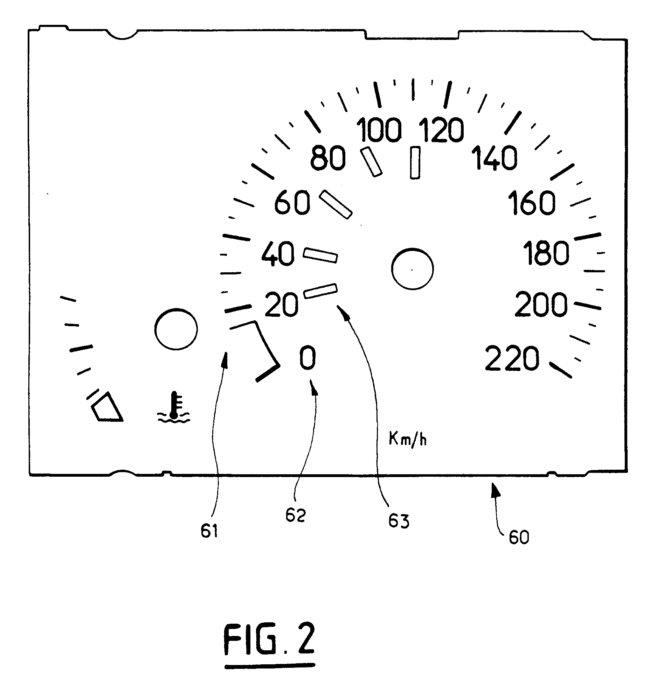

On a représenté à titre d'exemple sur la figure 2, un mode de réalisation non limitatif de cadran de compteur de vitesse classique.

On distingue pour ce seul cadran 60 trois types d'indication :
- des repères radiaux équi-répartis 61 représentatifs d'une échelle de vitesse,
- des indications numériques 62 associées à cette échelle de vitesse, et
- des repères 63 orientés radialement en regard de l'axe de l'aiguille associée et représentant des conseils à l'égard du conducteur pour le changement de rapport de boîte de vitesse.

Le cas échéant, le cadran 60 peut comporter en outre :
- des repères "réglementaires" imposés par les législations des divers pays où sera commercialisé le véhicule,
- des références, n° mines ... etc ...

Les gammes de vitesse différentes d'un véhicule à l'autre, les variations de graphisme dans les repères 61 et surtout dans les indications numériques 62, les diverses options de motorisation et les spécificités d'équipement pneumatiques du véhicule, etc ... conduisent souvent à un grand nombre de références de tableaux de bord, pour chacune des familles de véhicules et plus généralement pour chaque constructeur automobile. Le document DE-A-40 15 170, formant la base du préambule de la revendication 1, décrit un tableau de bord dans lequel le fond d'un cadran ou les indications de celui-ci sont formés par dépôt d'un film métallique optiquement transparent sur un support.

Il en résulte inévitablement des problèmes de stockage et d'approvisionnement sur chaîne de montage bien connus des spécialistes.

La présente invention a pour but d'améliorer la situation.

Le but principal de la présente invention est de réduire le nombre de références de tableau de bord, tout en autorisant une personnalisation aussi précise que souhaitée par le constructeur automobile.

Ce but est atteint selon la présente invention grâce à un procédé qui comprend les étapes consistant à :
i) former un cadran comportant des indications standards communes à un groupe de tableaux de bord,
ii) former sur le cadran des plages d'indications spécifiques aptes à être révélées par un rayonnement adapté,
iii) assembler le tableau de bord en incorporant le cadran dans un boîtier recouvert par la visière, et
iv) soumettre le cadran à un rayonnement révélateur adapté pour révéler des indications spécifiques lorsque celles-ci sont déterminées.

Selon une autre caractéristique avantageuse de la présente invention, l'étape ii) précitée consiste à appliquer sur le cadran une couche de matériau apte à être modifiée pour être rendu apparente localement par application d'un rayonnement laser à l'étape iv).

Selon une autre caractéristique avantageuse de la présente invention, le rayonnement adapté est conçu pour traverser la vitre de la visière du tableau de bord et l'étape iv) consiste à soumettre le cadran à un rayonnement révélateur traversant la vitre de la visière et appliqué ainsi sur le cadran.

Toutefois, selon une variante l'étape iv) peut consister à introduire à l'intérieur du tableau de bord une tête d'émission du rayonnement révélateur adapté, pour éviter que celui-ci n'ait à traverser la vitre de la vistère.

Selon une autre caractéristique avantageuse de la présente invention, l'étape iv) est opérée au moment de l'assemblage du véhicule (sur la chaîne ou à proximité de celle-ci).

Selon une autre caractéristique avantageuse de la présente invention, le procédé précité compend en outre l'étape consistant à procéder à une aspiration de l'atmosphère et/ou des poussières internes au tableau de bord pendant l'étape iv) ou postérieurement à celle-ci.

La présente invention concerne également un système mettant en oeuvre le procédé précité caractérisé par le fait qu'il comprend :
- un moyen support de tableau de bord comprenant un cadran muni d'indications standards communes à un groupe de tableaux de bord et de plages d'indications spécifiques aptes à être révélées par un rayonnement adapté, ledit cadran étant incorporé dans un boîtier recouvert par un visière,
- un moyen apte à diriger un rayonnement révélateur vers le cadran d'un tableau de bord,
- un moyen de manipulation apte à opérer un déplacement relatif entre le rayonnement révélateur et le cadran, et
- un moyen de saisie permettant la prise en compte de données liées aux indications spécifiques du tableau de bord pour piloter en conséquence les moyens de manipulation.

Selon une autre caractéristique avantageuse de la présente invention, le tableau de bord comprend un orifice scellé permettant l'aspiration de l'atmosphère et/ou des poussières internes au tableau de bord tout en garantissant une étanchéité ultérieure aux corps étrangers tels que poussières du tableau de bord.

Selon une autre caractéristique avantageuse de la présente invention, au moins un cadran est muni de deux couches superposées de peinture de couleurs différentes, dont une couche superficielle susceptible d'être modifiée par un rayonnement laser pour être rendue apparente, par exemple susceptible d'être brulée.

D'autres caractéristiques, buts et avantages de la présente invention apparaîtront à la lecture de la description détaillée qui va suivre et en regard des dessins annexés donnés à titre d'exemple non limitatif et sur lesquels :
- la figure 1 précédemment décrite représente une vue schématique en perspective éclatée d'un tableau de bord conforme à l'état de la technique,
- la figure 2 représente schématiquement un cadran de tableau de bord classique, et
- la figure 3 représente schématiquement un système de personnalisation de tableau de bord conforme à la présente invention.

On va maintenant décrire un procédé préférentiel de mise en oeuvre préférentiel de la présente invention.

Selon ce procédé, le boîtier 10, le circuit imprimé 20, le réhaut 30 et la visière 40 pouvue d'une vitre 41, sont préparés selon la technique classique connue de fabrication des tableaux de bord.

En ce qui concerne les modules indicateurs 50, les mouvements de mesure 51 et les témoins lumineux 52 sont également réalisés selon la technique classique.

En revanche, selon la présente invention, pour l'un au moins des cadrans 60 utilisés, seules les indications standards communes à un groupe de tableaux de bord sont formées de manière visible sur ledit cadran 60.

Par exemple, en référence à la figure 2, représentant un compteur de vitesse comme précédemment indiqué, les repères 61 et les symboles numériques 62 standards et communs à un groupe de tableaux de bord peuvent être préformés sur un cadran 60.

En outre selon l'invention, on forme sur ce cadran 60 des plages d'indications spécifiques aptes à être révélées ultérieurement par un rayonnement adapté, de préférence susceptible de traverser la vitre de la visière du tableau de bord.

Par exemple, en référence à la figure 2, les indications spécifiques peuvent correspondre aux repères 63 dont la position exacte sur le cadran peut différer d'un véhicule à l'autre, selon notamment la motorisation de celui-ci et/ou l'équipement pneumatique du véhicule. Pour cette raison, et afin de ne pas multiplier le nombre de références de tableaux de bord, selon l'invention il est prévu de ne pas conformer définitivement lesdites indications spécifiques, mais de prévoir des plages sur lesquelles ultérieurement la localisation précise des indications spécifiques, par exemple des repères 63 pourra être définie grâce au rayonnement révélateur précité.

Plus précisément, selon la mise en oeuvre préférentielle de la présente invention, l'étape ii) du procédé précité consiste à appliquer sur le cadran 60, préalablement à l'assemblage du tableau de bord, une couche de matériau apte à être modifiée pour être rendue visible (par exemple détruite) localement par application d'un rayonnement laser.

Plus précisément encore, selon la présente invention, l'étape ii) du procédé consiste à déposer sur le cadran deux couches superposées de peinture de couleurs différentes, par exemple une première couche de couleur orange et une seconde couche superposée de couleur noire. Ainsi, lors de l'application ultérieure d'un rayonnement laser, la couche superficielle de couleur noire est modifiée (détruite) localement pour faire apparaître la couche sous-jacente orange au niveau de zone choisie correspondant, par exemple, à la localisation et à la géométrie des repères référencés 63 sur la figure 2.

Une fois le boîtier 10, le circuit imprimé 20, le réhaut 30, la visière 40 équipée de la vitre 41 ainsi que les différents modules indicateurs 50 préparés comme indiqué précédemment, on peut procéder à l'assemblage du tableau de bord. La fixation des diverses pièces précitées est réalisée selon toute technique connue de l'homme de l'art.

Selon la présente invention, le tableau de bord ainsi assemblé est ensuite personnalisé à l'étape iv), par exemple sur la chaîne de montage de véhicule, en fonction des indications spécifiques au véhicule lorsque celles-ci sont déterminées.

Pour cela, il suffit d'appliquer un rayonnement révélateur, de préférence un rayonnement laser, à travers la vitre 41 de la visière 40 pour révéler les plages 63 spécifiques requises.

L'homme de l'art comprendra aisément que de ce fait, grâce à la présente invention, il est possible de ne produire et stocker qu'un seul tableau de bord standard pour tous les véhicules d'une famille, soit une seule référence de tableaux- de bord, ceux-ci étant personnalisés au dernier instant, avant d'être installés sur la planche de bord du véhicule, selon les indications spécifiques alors connues pour le véhicule.

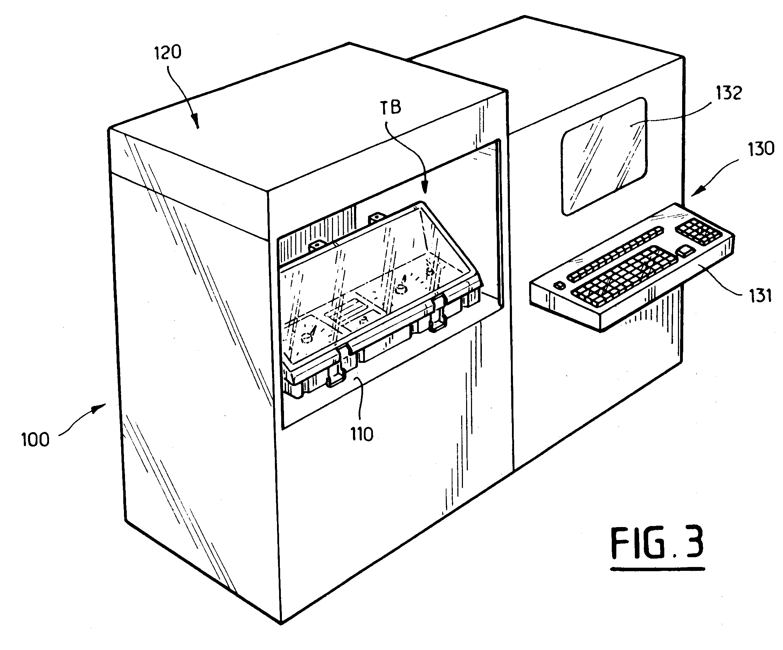

On a représenté schématiquement sur la figure 3 un système de personnalisation de tableau de bord conforme à la présente invention destiné à être placé à proximité d'une chaîne de montage de véhicule.

Le système 100 représenté sur la figure 3 annexée comprend essentiellement :
- un moyen 110 conçu pour recevoir au moins un tableau de bord TB,
- un moyen 120 apte à diriger un rayonnement révélateur vers le tableau de bord TB, a travers la vitre 41 de la visière 40 de celui-ci,
- un moyen de manipulation apte à opérer un déplacement relatif entre le rayonnement révélateur et le tableau de bord TB, et
- un moyen de saisie 130 permettant la prise en compte de données liées aux indications spécifiques du tableau de bord pour piloter en conséquence les moyens de manipulation.

Les moyens support 110 peuvent faire l'objet de nombreux modes de réalisation. De préférence, les moyens support 110 sont pourvus de moyens aptes à positionner de façon précise le tableau de bord TB dans l'espace par rapport aux moyens 120 générateurs du rayonnement révélateur.

Les moyens 120 générateurs du rayonnement révélateur sont formés de préférence d'un laser.

Les moyens de manipulation précités comprennent de préférence un robot manipulateur apte à agir soit sur le tableau de bord TB, soit sur le générateur de rayonnement révélateur 120, soit sur une optique de sortie associée aux moyens générateurs 120 pour contrôler un déplacement entre le rayonnement révélateur et le tableau de bord TB.

Les moyens de manipulation précités sont pilotés par les données introduites à l'aide des moyens de saisie 130.

Ces moyens de saisie de données 130 peuvent également faire l'objet de nombreux modes de réalisation.

De préférence, comme schématisé sur la figure 3, ces moyens de saisie comprennent une unité informatique comportant un clavier 131 et un écran graphique 132 facilitant la gestion du processus par l'opérateur.

En variante, les moyens de saisie de données 130 peuvent comprendre un système à commande vocale et/ou un système de lecture de code attribué aux véhicules.

On a déjà proposé des équipements de marquage et/ou de gravures de précision, en particulier sur des pièces plastiques et/ou métalliques, à l'aide d'un rayonnement laser.

Pour cette raison, les moyens composant le système 100 conformes à la présente invention ne seront pas décrits dans le détail par la suite.

A titre d'exemple non limitatif, les moyens générateurs 120 peuvent comprendre un laser YAG monomode associé à une optique pilotée par les moyens manipulateurs pour provoquer la révélation des indications spécifiques sur le tableau de bord par balayage du faisceau laser.

A titre d'exemple, la longueur d'onde utilisée peut être de l'ordre de 1,06µm et, la fréquence de répétition de l'ordre de 20kHz. La profondeur de gravure obtenue à l'aide d'un tel rayonnement laser est directement liée au temps de balayage et comprise typiquement entre 0,5µm et 20µm. L'épaisseur de la couche à détruire à l'aide du rayonnement laser doit donc être prévue dans cette plage de valeurs.

On notera que l'utilisation d'un rayonnement laser permet une grande précision et qualité dans la définition des indications spécifiques sur le tableau de bord et n'exige aucun nettoyage de pièces préalables.

De façon connue en soi, il est généralement prévu des joints interposés entre les différentes pièces composant un tableau de bord, pour assurer l'étanchéité aux corps étrangers et notamment aux poussières de ceux-ci après assemblage.

Toutefois, selon la présente invention, il est avantageusement prévu dans le tableau de bord un orifice scellé autorisant pendant l'opération de révélation, ou postérieurement à celle-ci, l'aspiration de l'atmosphère et/ou des poussières internes au tableau de bord résultant de la modification de la couche superficielle de peinture à l'aide du rayonnement laser.

Cet orifice scellé doit être placé au plus près du lieu d'application du rayonnement laser.

De préférence, l'orifice précité est pourvu d'un bouchon en élastomère ou équivalent susceptible d'être traversé par une aiguille creuse pour autoriser l'aspiration précitée tout en garantissant une étanchéité parfaite du tableau de bord après retrait de l'aiguille.

Bien entendu la présente invention n'est pas limitée au mode de réalisation particulier précédemment décrit.

En particulier, l'invention n'est pas limitée à l'utilisation d'une couche de peinture susceptible d'être modifiée (brûlée) par application d'un rayonnement laser, mais peut être mise en oeuvre à l'aide de tout type de matériau susceptible d'être révélé avec précision à l'aide d'un rayonnement laser apte à traverser la vitre 41 de la visière 40, après assemblage du tableau de bord. Par exemple, on peut envisager d'utiliser les plages d'encre déposées sur le cadran 60 et adaptées pour être révélées par un rayonnement de longueur d'ondes spécifiques et/ou de puissances spécifiques non présentes en lumière naturelle.

Par ailleurs, la présente invention n'est pas limitée à la personnalisation de compteur de vitesse ni aux repères particuliers référencés 63 sur la figure 2, mais s'applique à la définition de toutes indications spécifiques sur un tableau de bord, y compris des indications éventuelles associées au témoin lumineux 52.

Selon une autre caractéristique avantageuse de l'invention, l'étape d'application d'un rayonnement laser sur le tableau de bord peut être utilisée pour définir également, sur le tableau de bord une référence précise particulière liée aux indications spécifiques révélées. Cette référence précise particulière peut être définie sur la face avant du cadran 60, c'est-à-dire sur la face du cadran présentant les indications spécifiques révélées ou le cas échéant, sur une autre face et/ou un autre élément du tableau de bord. Pour cela, on peut par exemple pivoter le tableau de bord après révélation des indications spécifiques, et avant marquage du tableau de bord pour générer la référence. En variante, on peut également prévoir, après avoir révélé les indications spécifiques, de diriger le rayonnement laser vers une zone différente du tableau de bord, par exemple à l'aide d'un réflecteur intégré au système de personnalisation 100 et/ou intégré au tableau de bord TB pour former la référence sur une plage non directement visible du tableau de bord.

Le moyen générateur 120 est avantageusement pourvu d'un système autofocus pour garantir une révélation précise des indications spécifiques sur le tableau de bord.

Le cas échéant, le cadran 60 considéré peut également être muni de marques de centrage facilitant le positionnement relatif entre le générateur 120 et le tableau de bord TB.

L'homme de l'art comprendra aisément que le procédé et le système conformes à la présente invention, permettent de résoudre totalement les problèmes d'approvisionnement et de stockage de tableaux de bord avant utilisation sur chaînes de montage.

Dans le mode de mise en oeuvre préférentiel décrit précédemment, il est prévu d'appliquer le rayonnement révélateur adapté à travers la vitre de la visière.

Toutefois, les vitres de visière de tableau de bord de véhicules automobiles sont formées généralement par moulage de matière plastique, par exemple de polycarbonate. Or, certaines matières plastiques présentent des courbes d'absorption qui ne laissent pas passer toutes les longueurs d'ondes générées par les lasers existants de nos jours.

Pour palier cette difficulté, il est prévu en variante selon l'invention, de ne pas appliquer le rayonnement révélateur adapté à traver la vitre de la visière mais d'introduire à l'étape iv) une tête génératrice du rayonnement révélateur, à l'intérieur du tableau de bord, soit en arrière de la vitre.

Ainsi le rayonnement révélateur adapté est dirigé directement sur le cadran et n'a pas à traverser la vitre.

Pour cela, bien entendu, un orifice de passage doit être prévu dans le tableau de bord. Cet orifice de passage doit par ailleurs être rendu étanche ultérieurement. Pour cela, on peut prévoir, comme indiqué précédemment, de placer dans l'orifice de passage un bouchon en élastomère ou équivalent susceptible d'être traversé par la tête génératrice du rayonnement révélateur, toute en garantissant une étanchéité parfaite du tableau de bord après retrait de cette tête. On peut d'ailleurs prévoir un seul et unique bouchon en élastomère ou équivalent pour permettre le passage d'une part, de la tête génératrice, d'autre part des moyens d'aspiration précités.

Bien entendu, on peut également prévoir un passage libre au moment de l'application du rayonnement révélateur et recevant ultérieurement un bouchon d'étanchéité.

La tête génératrice du rayonnement révélateur introduite dans le tableau de bord peut être formée d'une tête laser placée en extrémité d'un bras manipulateur.

En variante, on peut prévoir de maintenir le laser à l'extérieur du tableau de bord et de placer ce laser en regard d'une fibre optique formant la tête génératrice introduite dans le tableau de bord.

Dans le cas de l'introduction de la tête génératrice dans le tableau de bord, cette tête est de préférence, équipée de moyens de reconnaissance de position.

Selon une autre caractéristique avantageuse de l'invention, les inventeurs préconisent d'utiliser un laser de type à excimère.

Les lasers à excimère sont bien connus des spécialistes. Ils émettent généralement dans l'ultra-violet. Les lasers à excimère sont des lasers à base d'un mélange d'un gaz rare tel que Ar, Kr ou Xe et d'un gaz halogène tel que Cl₂ ou F₂. Dans des conditions normales, ces gaz ne réagissent pas chimiquement. Toutefois, dans un environnement de décharge électrique, un atome du gaz rare s'associe à un atome du gaz halogène pour former une paire ou dimère par exemple XeCl ou ArF. Lors d'une dissociation ultérieure les dimères émettent un rayonnement, typiquement un rayonnement ultra-violet. Le terme anglo-saxon "EXCIMER" résulte ainsi de la contraction des expressions anglaises "EXCIted" et "diMER".

Ces lasers à excimère ont pour propriété d'agir sur les liaisons des molécules, et donc de transformer celles-ci sans brûlage, c'est-à-dire sans montée de température excessive.

Enfin, le cas échéant, le bouchon en élastomère ou équivalent servant à obturer le tableau de bord après aspiration et/ou introduction de la tête laser et retrait de celle-ci peut être remplacé par une capsule ou embout en matière plastique scellé thermiquement, ou le cas échéant par application d'ultra-sons.

## Revendications

1. Procédé de personnalisation de tableaux de bord (TB) de véhicules, comprenant un cadran (60) incorporé dans un boîtier (10) recouvert par une visière (40), caractérisé par le fait qu'il comprend les étapes consistant à :
i) former un cadran (60) comportant des indications standards communes à un groupe de tableaux de bord (TB),
ii) former sur le cadran (60) des plages d'indications spécifiques aptes à être révélées par un rayonnement adapté,
iii) assembler le tableau de bord en incorporant le cadran (60) dans un boîtier (10) recouvert par la visière (40), et
iv) soumettre le cadran (60) à un rayonnement révélateur adapté pour révéler des indications spécifiques, lorsque celles-ci sont déterminées.

2. Procédé selon la revendication 1, caractérisé par le fait que le rayonnement révélateur adapté est conçu pour traverser la vitre (41) de la visière (40) du tableau de bord (TB) et que l'étape iv) consiste à appliquer le rayonnement révélateur adapte sur le cadran (60) à travers la vitre (41) de la visière (40).

3. Procédé selon la revendication 1, caractérisé par le fait que l'étape iv) consiste à introduire une tête génératrice de rayonnement révélateur adapté à l'intérieur du tableau de bord (TB).

4. Procédé selon l'une des revendication 1 à 3, caractérisé par le fait que l'étape ii) consiste à appliquer sur le cadran (60) une couche de matériau apte à être modifiée localement par application d'un rayonnement laser à l'étape iv).

5. Procédé selon l'une des revendications 1 à 4, caractérisé par le fait que l'étape iv) est effectuée au moment de l'assemblage d'un véhicule.

6. Procédé selon l'une des revendications 1 à 5, caractérisé par le fait que l'étape ii) consiste à déposer sur le cadran (60) deux couches superposées de peinture de couleurs différentes.

7. Procédé selon l'une des revendications 1 à 6, caractérisé par le fait qu'il comprend en outre l'étape consistant à aspirer l'atmosphère et/ou les poussières internes au tableau de bord (TB) pendant l'étape iv) d'application du rayonnement révélateur, et/ou postérieurement à cette étape.

8. Système pour la mise en oeuvre du procédé conforme à l'une des revendications 1 à 7, caractérisé par le fait qu'il comprend :
- un moyen (110) support de tableau de bord (TB), comprenant un cadran (60) muni d'indications standards communes à un groupe de tableau de bord (TB) et de plages d'indications spécifiques aptes à être révélées par un rayonnement adapté, ledit cadran (60) étant incorporé dans un boîtier (10) recouvert par une visière (40),
- un moyen (120) apte à diriger un rayonnement révélateur adapté vers le cadran (60) d'un tableau de bord (TB),
- un moyen de manipulation apte à opérer un déplacement relatif entre le rayonnement révélateur et le tableau de bord (TB), et
- un moyen de saisie (130) permettant la prise en compte de données liées aux indications spécifiques du tableau de bord (TB) pour piloter en conséquence les moyens de manipulation.

9. Système selon la revendication 8, caractérisé par le fait que le moyen (120) générateur de rayonnement révélateur est conçu pour appliquer un rayonnement à travers la vitre (41) de la visière (40).

10. Système selon la revendication 8, caractérisé par le fait que le moyen (120) générateur de rayonnement révélateur comprend une tête apte à pénétrer à l'intérieur du tableau de bord (TB).

11. Système selon l'une des revendications 8 à 10, caractérisé par le fait que les moyens aptes à générer un rayonnement révélateur comprennent un laser.

12. Système selon la revendication 11, caractérisé par le fait que le laser est un laser de type à excimère comprenant un mélange d'un gaz rare et d'un gaz halogène.

13. Système selon l'une des revendications 8 à 12, caractérisé par le fait que les moyens de manipulation comprennent un robot apte à agir sur l'un des éléments choisis dans le groupe comprenant le tableau de bord (TB), le moyen (120) générateur de rayonnement révélateur et une optique de sortie du moyen (120) générant le rayonnement révélateur.

14. Système selon l'une des revendications 8 à 13, caractérisé par le fait que les moyens de saisie comprennent une unité informatique (130) à clavier (131) et écran de contrôle (132), comportant de préférence des moyens interactifs tels que reconnaissance vocale.

15. Système selon l'une des revendications 8 à 14, caractérisé par le fait qu'il comprend en outre des moyens aptes à aspirer l'atmosphère et/ou les poussières internes au tableau de bord (TB).

16. Système selon l'une des revendications 8 à 15, caractérisé par le fait qu'il comprend en outre des moyens (120) aptes à graver une référence sur un élément du tableau de bord (TB).

17. Système selon la revendication 10, caractérisé par le fait que la tête conçue pour pénétrer dans le tableau de bord (TB) comprend un laser.

18. Système selon la revendication 10, caractérisé par le fait que la tête conçue pour pénétrer dans le tableau de bord (TB) comprend une fibre optique associée à un laser placé à l'extérieur du tableau de bord (TB).

19. Tableau de bord (TB) comprenant un cadran (60) incorporé dans un boîtier (10) recouvert par une visière (40), obtenu à l'aide du procédé conforme à l'une des revendications 1 à 7, dans lequel le cadran (60) comporte des indications standards communes à un groupe de tableaux de bord (TB) et des plages d'indications spécifiques aptes à être révélées par un rayonnement adapté.

20. Tableau de bord selon la revendication 19, caractérisé par le fait que le cadran comprend sur des plages choisies une couche de matériau apte à être détruite localement par application d'un rayonnement révélateur.

21. Tableau de bord selon l'une des revendications 19 ou 20, caractérisé par le fait que le cadran comprend deux couches de matériau de couleurs différentes.

22. Tableau de bord selon la revendication 21, caractérisé par le fait que la couche superficielle de matériau est de couleur noire.

23. Tableau de bord selon l'une des revendications 19 à 22, caractérisé par le fait qu'il comprend un orifice scellé conçu pour permettre l'aspiration de l'atmosphère et/ou des poussières internes au tableau de bord tout en garantissant l'étanchéité ultérieure de celui-ci.

24. Tableau de bord selon la revendication 23, caractérisé par le fait que le joint scellé comprend un bouchon en élastomère ou équivalent apte à être traversé par une aiguille creuse d'aspiration.

25. Tableau de bord selon l'une des revendications 19 à 24, caractérisé par le fait que les indications spécifiques représentent des repères formant conseils pour le changement de rapport de boîte de vitesse, placées sur un cadran de compteur de vitesse.

26. Tableau de bord selon l'une des revendications 19 à 24, caractérisé par le fait que les indications spécifiques représentent des indications réglementaires.

## Claims

1. A method of personalizing a vehicle dashboard (TB), comprising an indicator dial (60) incorporated in a housing (10) covered by a shield (40), the method being characterized by the fact that it comprises the following steps:
i) providing a dial (60) including standard indications common to a group of dashboards (TB);
ii) providing areas on the dial (60) for specific indications suitable for being revealed by appropriate radiation;
iii) assembling the dashboard by incorporating the dial (60) inside a housing (10) covered by the shield (40); and
iv) subjecting the dial (60) to appropriate revealing radiation for revealing specific indications, once they have been determined.

2. A method according to claim 1, characterized by the fact that the appropriate revealing radiation is designed to pass through the window (41) of the shield (40) of the dashboard (TB), and that step iv) consists in applying the appropriate revealing radiation to the dial (60) through the window (41) of the shield (40).

3. A method according to claim 1, characterized by the fact that step iv) consists in inserting a head for generating the appropriate revealing radiation inside the dashboard (TB).

4. A method according to any one of claims 1 to 3, characterized by the fact that step ii) consists in applying on the dial (60) a layer of material suitable for being locally modified by application of laser radiation in step iv).

5. A method according to any one of claims 1 to 4, characterized by the fact that step iv) is performed at the time of vehicle assembly.

6. A method according to any one of claims 1 to 5, characterized by the fact that step ii) consists in depositing on the dial (60) two superposed layers of different colors of paint.

7. A method according to any one of claims 1 to 6, characterized by the fact that it further comprises a step which consists in sucking out the atmosphere and/or the dust from inside the dashboard (TB) during and/or after step iv) of applying the revealing radiation.

8. A system for implementing the method according to any one of claims 1 to 7, characterized by the fact that it comprises:
means (110) for supporting the dashboard (TB) comprising a dial (60) provided with standard indications common to a group of dashboards (TB) and areas for specific indications suitable for being revealed by appropriate radiation, said dial (60) being incorporated in a housing (10) covered by a shield (40);
means (120) suitable for directing appropriate revealing radiation to the dial (60) of a dashboard (TB);
handling means suitable for imparting relative displacement between the revealing radiation and the dashboard (TB); and
input means (130) for taking account of data associated with the specific indications for the dashboard (TB) and for driving the handling means accordingly.

9. A system according to claim 8, characterized by the fact that the means (120) for generating the revealing radiation are designed to apply radiation through the window (41) of the shield (40).

10. A system according to claim 8, characterized by the fact that the means (120) for generating revealing radiation comprises a head suitable for penetrating inside the dashboard (TB).

11. A system according to any one of claims 8 to 10, characterized by the fact that the means suitable for generating revealing radiation comprise a laser.

12. A system according to claim 11, characterized by the fact that the laser is an excimer type laser comprising a mixture of a rare gas and of a halogen gas.

13. A system according to any one of claims 8 to 12, characterized by the fact that the handling means comprise a robot suitable for acting on one of the elements selected from the group comprising: the dashboard (TB); the means (120) for generating the revealing radiation; and an output optical system of the means (120) for generating the revealing radiation.

14. A system according to any one of claims 8 to 13, characterized by the fact that the input means comprise a computer unit (130) having a keyboard (131) and a monitor screen (132), preferably including interactive means such as voice recognition.

15. A system according to any one of claims 8 to 14, characterized by the fact that it further comprises means suitable for sucking out the atmosphere and/or the dust from inside the dashboard (TB).

16. A system according to any one of claims 8 to 15, characterized by the fact that it further includes means (120) suitable for etching a reference on an element of the dashboard (TB).

17. A system according to claim 10, characterized by the fact that the head designed for penetrating inside the dashboard (TB) includes a laser.

18. A system according to claim 10, characterized by the fact that the head for penetrating inside the dashboard (TB) comprises an optical fiber associated with a laser placed outside the dashboard (TB).

19. A dashboard (TB) including an indicator dial (60) incorporated in a housing (10) covered by a shield (40) and obtained by means of the method according to any one of claims 1 to 7, in which the dial (60) includes standard indications common to a group of dashboards (TB) and areas for specific indications suitable for being revealed by appropriate radiation.

20. A dashboard according to claim 19, characterized by the fact that in selected areas the dial includes a layer of material suitable for being locally destroyed by applying revealing radiation thereto.

21. A dashboard according to claim 19 or 20, characterized by the fact that the dial includes two layers of materials of different colors.

22. A dashboard according to claim 21, characterized by the fact that the surface layer of material is black in color.

23. A dashboard according to any one of claims 19 to 22, characterized by the fact that it includes a sealed orifice designed to allow the atmosphere and/or dust inside the dashboard to be sucked out while guaranteeing that it is subsequently sealed.

24. A dashboard according to claim 23, characterized by the fact that the sealed orifice includes a plug of elastomer or the equivalent suitable for allowing a hollow suction needle to pass therethrough.

25. A dashboard according to any one of claims 19 to 24, characterized by the fact that the specific indications represent marks for providing guidance when changing gearbox ratio, and are placed on the dial of a speedometer.

26. A dashboard according to any one of claims 19 to 24, characterized by the fact that the specific indications represent indications required by regulations.

## Patentansprüche

1. Verfahren für die kundenspezifische Gestaltung von Armaturenbrettern (TB) von Kraftfahrzeugen, welche eine in ein mit einer Sichtblende (40) abgedecktes Gehäuse (10) eingelassene Instrumententafel (60) aufweisen,
**dadurch gekennzeichnet**, **daß**
dieses Verfahren folgende Schritte umfaßt:
i) Herstellung einer Instrumententafel (60), welche die üblichen Anzeigen aufweist, die eine Gruppe von Armaturenbrettern (TB) gemeinsam hat,
ii) Ausbildung auf der Instrumententafel (60) von spezifischen Anzeigenbereichen, welche durch einen geeigneten Anzeigestrahl sichtbar gemacht werden können,
iii) Zusammenbau des Armaturenbrettes, indem die Instrumententafel (60) in ein Gehäuse (10) eingesetzt wird, welches mit der Sichtblende (40) überdeckt ist, und
iv) Beleuchtung der Instrumententafel (60) mit einem Anzeigestrahl für die Sichtbarmachung von spezifischen Anzeigen, sobald diese bestimmt worden sind.

2. Verfahren nach Anspruch 1,
**dadurch gekennzeichnet**, **daß**
der Anzeigestrahl eine Glasscheibe (41) der Sichtblende (40) des Armaturenbrettes (TB) durchquert, und daß der Verfahrensschritt iv) darin besteht, den Anzeigestrahl durch die Glasscheibe (41) der Sichtblende (40) auf die Instrumententafel (60) zu leiten.

3. Verfahren nach Anspruch 1,
**dadurch gekennzeichnet**, **daß**
der Verfahrensschritt iv) darin besteht, daß ein Kopf für die Erzeugung des Anzeigestrahls im Inneren des Armaturenbrettes (TB) angeordnet wird.

4. Verfahren nach einem der Ansprüche 1 bis 3,
**dadurch gekennzeichnet**, **daß**
der Verfahrensschritt ii) darin besteht, daß auf die Instrumententafel (60) eine Schicht aus einem Material aufgetragen wird, welche in Verfahrensschritt iv) durch Beaufschlagung eines Laserstrahls lokal verändert werden kann.

5. Verfahren nach einem der Ansprüche 1 bis 4,
**dadurch gekennzeichnet, daß**
der Verfahrensschritt iv) im Laufe der Montage eines Fahrzeuges durchgeführt wird.

6. Verfahren nach einem der Ansprüche 1 bis 5,
**dadurch gekennzeichnet, daß**
der Verfahrensschritt ii) darin besteht, auf die Instrumententafel (60) zwei überlagerte Farbschichten unterschiedlicher Färbung aufzutragen.

7. Verfahren nach einem der Ansprüche 1 bis 6,
**dadurch gekennzeichnet, daß**
ein weiterer Verfahrensschritt vorgesehen ist, der darin besteht, im Verfahrensschritt iv) der Beaufschlagung des Anzeigestrahls und/oder nach diesem Verfahrensschritt die im Inneren des Armaturenbrettes (TB) befindliche Atmosphäre und/oder eventuellen Staub abzusaugen.

8. System für die Durchführung des Verfahrens nach einem der Ansprüche 1 bis 7,
**dadurch gekennzeichnet, daß**
dieses System folgendes aufweist:
- ein Mittel (110) für die Halterung eines Armaturenbrettes (TB), welches eine Instrumententafel (60) mit Standardanzeigen enthält, die eine Gruppe von Armaturenbrettern gemeinsam haben, sowie spezifische Bereiche für Anzeigen, welche durch einen geeigneten Anzeigestrahl sichtbar gemacht werden können, und daß die Instrumententafel (60) in ein Gehäuse (10) eingebaut wird, welches mit einer Sichtblende (40) abgedeckt ist,
- ein Mittel (120), welches geeignet ist, einen geeigneten Anzeigestrahl auf die Instrumententafel (60) eines Armaturenbrettes (TB) zu leiten,
- ein Betätigungsmittel, um eine relative Verschiebung zwischen dem Anzeigestrahl und dem Armaturenbrett (TB) zu bewirken, und
- ein Datenerfassungsmittel (130), welches es erlaubt, die Daten zu berücksichtigen, welche mit den spezifischen Anzeigen auf dem Armaturenbrett (TB) zusammenhängen, um auf diese Weise die Betätigungsmittel
entsprechend zu steuern.

9. System nach Anspruch 8,
**dadurch gekennzeichnet, daß**
das Mittel (120) für die Erzeugung des Anzeigestrahls so ausgelegt ist, daß es eine Strahlung durch die Glasscheibe (41) der Sichtblende (40) leiten kann.

10. System nach Anspruch 8,
**dadurch geknnzeichnet, daß**
das Mittel (120) für die Erzeugung des Anzeigestrahls einen Kopf aufweist, welcher in das Innere des Armaturenbrettes (TB) eindringen kann.

11. System nach einem der Ansprüche 8 bis 10,
**dadurch gekennzeichnet, daß**
die Mittel für die Erzeugung eines Anzeigestrahls einen Laser enthalten.

12. System nach Anspruch 11,
**dadurch gekennzeichnet, daß**
dieser Laser ein Exzimerlaser ist, welcher eine Mischung aus einem Edelgas und einem Halogengas enthält.

13. System nach einem der Ansprüche 8 bis 12,
**dadurch gekennzeichnet, daß**
die Betätigungsmittel einen Roboter enthalten, welcher auf eines der Elemente einwirken kann, das aus der Gruppe ausgewählt wird, welche das Armaturenbrett (TB) enthält, sowie das Mittel (120) für die Erzeugung des Anzeigestrahls und eine Optik am Ausgang des Mittels (120) für die Erzeugung des Anzeigestrahls.

14. System nach einem der Ansprüche 8 bis 13,
**dadurch gekennzeichnet, daß**
die Mittel für die Datenerfassung eine Informatikeinheit (130) mit einer Tastatur (131) und einem Kontrollschirm (132) aufweisen, welche vorzugsweise interaktive Mittel, wie zum Beispiel eine vokale Erkennung enthalten.

15. System nach einem der Ansprüche 8 bis 14,
**dadurch gekennzeichnet, daß**
es außerdem Mittel aufweist, welche geeignet sind, die Atmosphäre und/oder den Staub im Inneren des Armaturenbrettes (TB) abzusaugen.

16. System nach einem der Ansprüche 8 bis 15,
**dadurch gekennzeichnet, daß**
es außerdem Mittel (120) aufweist, welche geeignet sind, eine Kennzeichnung in eines der Element des Armaturenbrettes (TB) einzugravieren.

17. System nach Anspruch 10,
**dadurch gekennzeichnet, daß**
der Kopf, der dafür ausgelegt ist, in das Armaturenbrett (TB) einzudrngen, einen Laser aufweist.

18. System nach Anspruch 10,
**dadurch gekennzeichnet, daß**
der in das Armaturenbrett (TB) eindringende Kopf eine optische Faser aufweist, welche mit einem Laser verbunden ist, der außerhalb des Armaturenbrettes (TB) angeordnet ist.

19. Armaturenbrett (TB) mit einer Instrumententafel (60), welche in ein mit einer Sichtblende (40) abgedecktes Gehäuse (10) eingebaut ist, das mit Hilfe des Verfahrens nach den Ansprüchen 1 bis 7 hergestellt wird und in dem die Instrumententafel (60) Standardanzeigen aufweist, welche eine Gruppe von Armaturenbrettern gemeinsam haben, sowie Bereiche mit spezifischen Anzeigen, welche durch einen geeigneten Anzeigestrahl sichtbar gemacht werden können.

20. Armaturenbrett nach Anspruch 19,
**dadurch gekennzeichnet, daß**
die Instrumententafel auf ausgewählten Bereichen eine Schicht aus einem Material aufweist, welche lokal durch Beaufschlagung eines Anzeigestrahls zerstört werden kann.

21. Armaturenbrett nach einem der Ansprüche 19 oder 20,
**dadurch gekennzeichnet, daß**
die Instrumententafel mit zwei Schichten aus einem Material unterschiedlicher Färbung überzogen ist.

22. Armaturenbrett nach Anspruch 21,
**dadurch gekennzeichnet, daß**
die oberste Materialschicht schwarz eingefärbt ist.

23. Armaturenbrett nach einem der Ansprüche 19 bis 22,
**dadurch gekennzeichnet, daß**
es eine versiegelte Öffnung aufweist, die so ausgelegt ist, daß sie die Absaugung der Atmosphäre und/oder von Staub innerhalb des Armaturenbrettes erlaubt und dabei gleichzeitig die spätere Abdichtung dieser Öffnung gewährleistet.

24. Armaturenbrett nach Anspruch 23,
**dadurch gekennzeichnet, daß**
der versiegelte Anschluß einen Verschluß aus Elastomer od.dgl. aufweist, welcher mit einer hohlen Absaugnadel durchstochen werden kann.

25. Armaturenbrett nach einem der Ansprüche 19 bis 24,
**dadurch gekennzeichnet, daß**
die spezifischen Anzeigen Hinweise für einen empfohlenen Gangwechsel bilden, die auf dem Geschwindigkeitsanzeiger erscheinen.

26. Armaturenbrett nach einem der Ansprüche 19 bis 24,
**dadurch gekennzeichnet, daß**
die spezifischen Anzeigen Richtwerte darstellen.
